# EUROPÄISCHE PATENTANMELDUNG

(11) **EP 2 392 893 A1**
(43) Veröffentlichungstag der Anmeldung: **07.12.2011**
(21) Anmeldenummer: 11004467.4
(22) Anmeldetag: 31.05.2011
(51) Int. Cl.: G01B 11/06, G01B 11/25

(54) **Höhenvermessungs-Vorrichtung und Verfahren zur Höhenvermessung einer Kraftfahrzeug-Zentraelektrik**

(30) Priorität: 05.06.2010 DE 102010022827
(71) Anmelder: TSK Prüfsysteme GmbH, 32457 Porta Westfalica (DE)
(72) Erfinder: Gronemann, Andreas, 32425 Minden (DE)
(74) Vertreter: Bremer, Ulrich

(57) **Zusammenfassung**

Die Erfindung betrifft eine Höhenvermessungs-Vorrichtung (1) zur Höhenvermessung einer Kraftfahrzeug-Zentralelektrik (2) mit aufgenommenen Steckteilen (31, 32) und ein entsprechendes Verfahren, wobei die Höhenvermessungs-Vorrichtung (1) mindestens aufweist:
eine Video-Projektionseinrichtung (10) zur Aufnahme von Video-Projektions-Bildsignalen (S2) von einer Steuereinrichtung (8) und Ausgabe eines zweidimensionalen Video-Projektionsbildes (13) auf einen Messbereich (7), und
eine Kamera (4) zur Aufnahme eines zweidimensionalen Bildes des Messbereichs (7) und Ausgabe von Bildsignalen (S1) an die Steuereinrichtung (8) zur Ermittlung einer Höhenkonturierung der Steckteile (31, 32),
wobei die Projektionseinrichtung (10) unter einem Projektionswinkel (a) gegenüber der optischen Achse (A) der Kamera (4) versetzt ist,
wobei in dem von der Video-Projektionseinrichtung (10) ausgegebenen Video-Projektionsbild (13) eine zeitlich sich verändernde Struktur (14, 16) enthalten ist

## Beschreibung

Die Erfindung betrifft eine Höhenvermessungs-Vorrichtung zur Höhenvermessung einer Kraftfahrzeug-Zentralelektrik und ein entsprechendes Verfahren.

Bei derartigen Höhenvermessungs-Vorrichtungen wird die Höhe von in ein Gehäuse der Zentralelektrik eingesetzten Steckteilen, insbesondere Relais und Sicherungen, bestimmt.

Die Sicherungen und Relais werden in ein Gehäuse der Zentralelektrik in entsprechende Steckeraufnahmen eingesteckt. Der sichere Sitz, d. h. eine korrekte Einstecktiefe, sowie weiterhin auch im Allgemeinen die richtige Position der einzelnen Steckteile, wird vor dem Einbau In das Kfz überprüft. Die korrekte Position wird im Allgemeinen in vorangehenden Schritten überprüft, z. B. durch Detektion der Farbe und des Transparenzverhaltens des Steckteils und auch z. B. durch Texterkennung der aufgedruckten Angaben auf den Steckteilen mittels OCR.

Nach diesen ersten Überprüfungen, ob die Steckteile an den richtigen Positionen sitzen, wird dann ihre Einstecktiefe überprüft. Hierzu sind unterschiedliche Verfahren bekannt. Gemäß einem bekannten System wird ein Laser von der Seite an der Zentralelektrik vorbeigeführt, um die Höhe sämtlicher eingesetzter Steckteile zu überprüfen. Der Laser streicht hierbei über diese Steckteile hinweg und wird daher ein zu hohes Steckteil als Fehler erkennen.

Weiterhin sind Höhenvermessungs-Vorrichtungen auf Grundlage der Stereoskopie bekannt, d. h. mit zwei zueinander versetzten Kameras, die somit eine falsche Einstecktiefe stereoskopisch ermitteln können.

Eine optische Vermessung der Steckteile einer KfZ-Zentralelektrik ist jedoch bereits problematisch, da die Sicherungen und Relais im Allgemeinen als Kunststoffkörper mit eingegossenen Metallteilen ausgebildet sind und daher auf den im Allgemeinen ganz oder teilweise transparenten Kunststoffkörpern und an deren Oberfläche vorragenden Metallteilen Reflexionen auftreten können.

In anderen technischen Gebieten und anderen Anwendungen wird eine Vermessung durch Triangulation eingesetzt, bei der im Allgemeinen ein verfahrbarer Lichtstrahl über eine Linienoptik auf der Oberfläche abgebildet wird. Die Lichtlinie wird nachfolgend direkt oder über einen angesteuerten Umlenkspiegel über das Objekt geführt; eine Kamera ist hierzu unter einem Projektionswinkel versetzt angeordnet, so dass eine Triangulation ermöglicht wird, bei der die Höhenprofilierung in dem Bild der Kamera als Versatz der Linienbereiche der Lichtlinie abgebildet wird.

Da der Lichtstrahl über eine Bewegung der Lichtquelle, oder über einen makroskopischen, in einem größeren Winkelbereich zu verstellenden Spiegel abgelenkt wird, ist somit ein bewegliches Teil vorhanden, mit entsprechenden Wartungs- und Verschleißproblemen sowie Problemen der Ansteuergenauigkeit.

Die DE 10 2008 009 680 A1 zeigt ein Verfahren und eine Vorrichtung zur dreidimensionalen Vermessung von bestückten Bauelemente-Trägern. C. Waddington et al; "Analysis of measurement sensitivity to illuminance and fringe-pattern gray levels for fringe-pattern projection adaptive to ambient lighting"; Optics and Lasers in Engineering, Volume 48, Issue 2, Fringe Projection Techniques, February 2010, S. 251-256 beschreiben eine Höhenvermessung von Steckteilen durch Triangulation.

Gemäß der DE 196 08632 A1 wird ein Spiegelchip mit Mikrospiegeln zur Ablenkung eines Projektionsstrahls eingesetzt.

Der Erfindung liegt die Aufgabe zu Grunde, eine Höhenvermessungs-Vorrichtung und ein Verfahren zur Höhenvermessung einer KraftfahrzeugElektronik mit aufgenommenen Steckteilen zu schaffen, die eine sichere und weitgehend wartungsfreie Höhenvermessung ermöglichen.

Diese Aufgabe wird durch eine Höhenvermessungs-Vorrichtung nach Anspruch 1 und ein Verfahren nach Anspruch 14 gelöst. Das erfindungsgemäße Verfahren kann insbesondere mit der erfindungsgemäßen Höhenvermessungs-Vorrichtung durchgeführt werden. Die Unteransprüche beschreiben bevorzugte Weiterbildungen.

Erfindungsgemäß wird die Höhe der in das Gehäuse der Zentralelektrik eingesetzten Steckteile, d. h. Sicherungen und Relais, somit durch eine Triangulation bestimmt. Hierzu ist eine Video-Projektionseinrichtung gegenüber der Kamera um einen Projektionswinkel versetzt. Ein wesentlicher Gedanke der Erfindung ist hierbei, als Projektionseinrichtung eine Video- Projektionseinrichtung zur Aufnahme von (elektrischen) Projektions-Bildsignalen und zur Ausgabe eines zweidimensionalen Projektionsbildes einzusetzen. Anders als bei herkömmliche, im Allgemeinen für andere Vermessungen eingesetzte Triangulationsverfahren wird somit nicht z. B. durch eine Linienoptik eine eindimensionale Lichtlinie erzeugt und direkt über eine Bewegung der Lichtquelle oder über einen Ablenkspiegel sukzessive über das Messfeld verfahren. Es wird vielmehr z. B. direkt ein zweidimensionales Bild auf den Messbereich projiziert, d. h. ein vorprogrammierter oder aktuell von einer Steuereinrichtung erzeugter Video-Film abgespielt, in dem (als Teil von dem) mindestens eine sich zeitlich verändernde Licht-Struktur dargestellt wird.

Diese Lichtstruktur kann insbesondere eine helle Linie bzw. Lichtlinie sein oder enthalten, so dass in dem sich zeitlich verändernden zweidimensionalen Video-Projektionsbild bzw. zweidimensionalen Video-Film eine Linie enthalten sein kann, die sich in dem bzw. innerhalb des zweidimensionalen Video-Projektionsbildes bewegt. Die Steuereinrichtung kann somit in den Bildsignalen ein Linienbild der Linie für die Triangulation ermitteln. Somit kann ein Lichtvorhang oder eine Lichtlinie simuliert werden.

Anders als z. B. in der eingangs genannten DE 196 08632 A1, in der ein gesamtes Projektionsbild durch Ablenkung mittels Spiegeln bewegt wird, bewegt sich somit gemäß einer Ausführungsform eine Struktur, z. B. eine Linie, in dem bzw. innerhalb des Video-Projektionsbildes, d.h. das Video- Projektionsbild (Videofilm) zeigt die sich verändernde Struktur, wobei andere Bereiche des Video-Projektionsbildes hingegen unverändert bleiben, so dass sie als Referenz für die Struktur, z. B. die sich bewegende Linie, dienen.

Die Steuereinrichtung kann z.B. auch mehrteilig ausgebildet sein und einzelne Elemente für die Aufnahme der Bildsignale der Kamera, Auswertung der Bildsignale sowie Ausgabe der Video- Projektionssignale aufweisen.

Bereits hierdurch werden einige Vorteile erreicht. So kann der Messbereich sehr genau abgefahren werden, so dass gegenüber z. B. einfachen Höhenkontrollen durch einen parallel zum Boden verfahrenen Laser deutlich genauere Messungen möglich sind. Insbesondere kann ein falsch eingesetztes Steckteil genau lokalisiert werden.

Gegenüber herkömmlichen, bei Höhenvermessungen von Kfz- Zentralelektriken im Allgemeinen nicht eingesetzten Triangulationsverfahren, bei denen ein Laser-Lichtvorhang über einen makroskopischen verstellbaren Spiegel verfahren wird, entfällt erfindungsgemäß ein derartiges, mechanisch verstelltes Bauteil, so dass die Wartungsfreundlichkeit und Zuverlässigkeit deutlich erhöht wird. Beim Einsatz von Laser-Lichtleisten für Triangulationen ist es im Allgemeinen auch erforderlich, den Laser zu fokussieren, um einen scharfen Rand zu bilden. Diese zusätzliche Fokussierung erfordert somit eine entsprechende Fokussier-Optik. Erfindungsgemäß sind derartige zusätzliche externe Fokussier-Optiken nicht erforderlich; ein Abgleich der unterschiedlichen Abstände des Beamers zu der oberen und unteren Bildkante des ausgegebenen Bildes können durch den Trapezausgleich z. B. eines Beamers automatisch ausgeglichen werden. Die interne Fokuseinstellung des Beamers kann nach der einmaligen Anfangs-Einstellung unverändert bleiben und braucht für den laufenden Betrieb bzw. die Triangulationen nicht mehr verändert zu werden.

Als Video-Projektionseinrichtung kann vorzugsweise ein Beamer, insbesondere ein Halogen- oder LED-Beamer eingesetzt werden. Hierbei können die Pixel durch LCD- oder DLP-Technologie erzeugt werden. Die Video- Projektionseinrichtung erzeugt somit direkt ein zweidimensionales Bild, Insbesondere mittels eines Halbleiter-Bauelementes mit einer Matrix-Anordnung von Pixeln, bei dem über den einzelnen Pixeln mikroskopische Kipp-Spiegel angeordnet sind; derartige mikroskopische, im Nano- oder Mikro-Bereich ausgebildete Kipp-Spiegel sind durch einen elektrischen Puls zwischen zwei Zuständen kippbar; sie unterscheiden sich somit deutlich von einem wartungsanfälligen, makroskopischen Verstellspiegel, der über eine Vielzahl von Winkelstellungen bzw, einen größeren Winkelbereich verfahren wird.

Selbst der Einsatz einer polychromatischen DLP-Projektionseinrichtung, die ggf. über ein mechanisches, schnell rotierendes Farbrad erzeugt wird, wird hierbei als vorteilhaft angesehen, da derartige mechanische Ausbildungen deutlich stabiler als Verstell-Spiegel sind, die eine Lichtleiste makroskopisch sukzessive und iterativ über einen Verstellwinkel verfahren müssen.

Darüber hinaus sind auch noch weitere Vorteile möglich. So können in dem Video-Bild statt einer einfachen Lichtlinie auch komplexere Licht- Strukturen ausgegeben werden. So können z. B. mehrere parallele Licht-Linien gleicher oder auch unterschiedlicher Wellenlänge ausgegeben werden. Das Ausgeben von Licht-Linien unterschiedlicher Wellenlängen bietet den Vorteil, ein unterschiedliches Transmissionsverhalten oder Reflexionsverhalten der erfassten Steckteile zu berücksichtigen, da die Steckteile im Allgemeinen unterschiedliche Farbwerte und auch unterschiedliche Transparenzwerte aufweisen. Somit können die eingangs beschriebenen Probleme verringert werden, die bei der optischen Vermessung von aus einem Kunststoffkörper mit metallischen Innenteilen bestehenden Steckteilen auftreten können. Es zeigt sich insbesondere, dass auch ein Vergleich von Messwerten von Licht-linien unterschiedlicher Wellenlänge vorteilhaft ist.

Weiterhin können zwei oder mehr Lichtlinien auch unter verschiedenen Winkeln aufprojiziert werden. So können z. B. ein oder mehrere Lichtlinien in einer ersten Richtung verfahren werden, um die Steckteile entlang ihrer Längsrichtung abzufahren bzw. abzuscannen. Weiterhin kann gleichzeitig oder nachfolgend eine Lichtlinie in einer um 90 Grad versetzten Richtung erzeugt bzw. simuliert werden, um ggf. versetzt angeordnete Steckteile zu erfassen und insbesondere aus beiden Messungen zusammen Rückschlüsse ziehen zu können. Die mehreren Lichtlinien können somit zeitgleich verfahren werden, so dass sich keine Verzögerung gegenüber dem Einsatz lediglich einer Lichtlinie ergibt.

Darüber hinaus ist der Einsatz deutlich komplexerer Lichtstrukturen möglich, z. B. auch unter schrägen Winkeln bei einer Detektion von Problemen.

Ein weiterer Vorteil der Erfindung liegt in der Möglichkeit einer Rückkopplung bzw. einer Signalauswertung der aufgenommenen Bildsignale der Kamera und einer hiervon abhängigen Ausgabe der Video- Projektionsbildsignale an die Video- Projektionseinrichtung. Während herkömmliche Systeme einen durchgehenden Scan- oder Abtastvorgang vornehmen, kann erfindungsgemäß von der Steuereinrichtung direkt eine Auswertung der von der Kamera aufgenommenen Bild-Signale vorgenommen werden, und bei Erkennen einer Unregelmäßigkeit oder eines Problems das ausgegebene Video-Bildsignal umgehend geändert werden, um z. B. den problematischen Bereich neu und unter anderen Bedingungen, z. B. anderen Wellenlängen und/oder oder anderem Winkel abzuscannen.

Weiterhin kann erfindungsgemäß auch das die Steckteile umgebende Gehäuse, insbesondere eine obere Gehäusekante erfasst werden, um nicht nur relative Höhen der eingesetzten Steckteile zueinander zu erfassen, sondem diese auch in Bezug zur Gehäusewand bzw. deren Oberkante zu setzen, so dass in dem Gehäuse auch absolute Höhen detektiert werden können.

Erfindungsgemäß kann auch eine Kalibrierung erfolgen, bei der die Video-Projektionseinchtung z. B. erst einige Punkte, z. B. vier Punkte in die Ecken des Messbereichs bzw. Prüffeldes projiziert, so dass nachfolgend eine Kalibrierung des Kamera-Video-Projektionssystems für die Triangulation erfolgen kann und dann die eigentliche Messung erfolgt.

Ein weiterer Vorteil liegt in der breiten Einsatz-Möglichkeit des zweidimensionalen Video-Projektionssignals auch bei anderen, insbesondere vorhergehenden oder nachfolgenden Messungen. So wird bei der Vermessung der Kfz-Zentralelektrik im Allgemein vorab das Vorhandensein und z. B. der Farbwert und die Beschriftung der einzelnen Steckteile überprüft, z. B. durch Farbmessung und OCR-Schrifterkennung. Hier kann die erfindungsgemäße Video-Projektionseinrichtung zu einer besseren Ausleuchtung des Messfeldes bzw. Messbereichs beitragen, wobei z. B. dunklere Bereiche wie EckBereiche und überschattete Bereiche stärker ausgeleuchtet werden. Somit ist der Einsatz der Video-Projektionseinrichtung nicht auf die direkte Höhenvermessung beschränkt, sondern kann in der Messvorrichtung oder Prüfvorrichtung auch weitergehend eingesetzt werden, so dass z. B. zusätzliche Beleuchtungseinrichtungen wie seitliche Lichtleisten entfallen können.

Die Steuereinrichtung kann grundsätzlich durch eine angeschlossene Recheneinrichtung, z. B. einen PC, ausgebildet werden, oder durch ein speziell hierfür vorgesehenes Bauteil. Somit kann erfindungsgemäß die Steuereinrichtung entweder bereits Teil der erfindungsgemäßen Höhenvermessungs-Vorrichtung sein oder auch zusätzlich an die erfindungsgemäße Höhenvermessungs-Vorrichtung angeschlossen werden.

Gemäß einer erfindungsgemäßen Weiterbildung kann die Video-Projektionseinrichtung gebildet sein aus einer Halbleiter-Einrichtung ohne makroskopisch bewegliche Elemente, z. B. einen DLP-Beamer oder LED-Beamer.

Gemäß einer erfindungsgemäßen Weiterbildung kann in dem Video-Projektionsbild als Struktur mindestens eine Linie enthalten sein, die sich in dem Video-Projektionsbild bewegt, wobei die Steuereinrichtung in den Bildsignalen ein Linienbild der Linie für die Triangulation ermittelt. So können z. B. Sprünge in dem Linienbild einem entsprechenden Höhensprung des jeweiligen Objekts zugeordnet werden.

Gemäß einer erfindungsgemäßen Weiterbildung kann die sich verändernde Struktur im wesentlichen eindimensional sein.

Alternativ oder ergänzend hierzu ist es auch möglich, bewusst eine nicht- eindimensionale Struktur zu projizieren; so kann z. B. zunächst eine Linie oder eindimensionale Struktur projiziert werden, um die Höhenkonturierung als Sprünge im Linienbild zu ermitteln, und dann nachfolgend z. B. eine zweidimensionale, entgegen gesetzte Linienkonturierung erzeugt und aufprojiziert werden, die gemäß der berechneten Höhenkonturierung im Linienbild zu einer geradlinigen Struktur führen sollte. Dies ermöglicht somit eine Verifizierung der ermittelten Höhenkonturierung, um fehlerhafte Ermittlungen der Höhenkonturierung, die z. B. aufgrund von Lichtreflexionen an Metallteilen auftreten können, auszuschließen.

Die erfindungsgemäße Höhenvermessungs-Vorrichtung dient somit zur Vermessung einer Kraftfahrzeug-Zentralelektrik, wobei insbesondere während der Vermessung die relative Position zwischen Kamera und Zentralelektrik nicht verändert wird.

Die Erfindung wird im Folgenden anhand der beiliegenden Zeichnungen an einigen Ausführungsformen näher beschrieben. Es zeigen:
- Fig. 1: eine erfindungsgemäße Vorrichtung zur Höhenvermessung einer Kraftfahrzeug-Zentralelektrik in Seitenansicht;
- Fig. 2: eine perspektivische Ansicht der Vorrichtung aus Figur 1;
- Fig. 3: ein von der Kamera aufgenommenes Bild; und
- Fig. 4: ein Beispiel eines ausgegebenen Projektions-Videobildes.

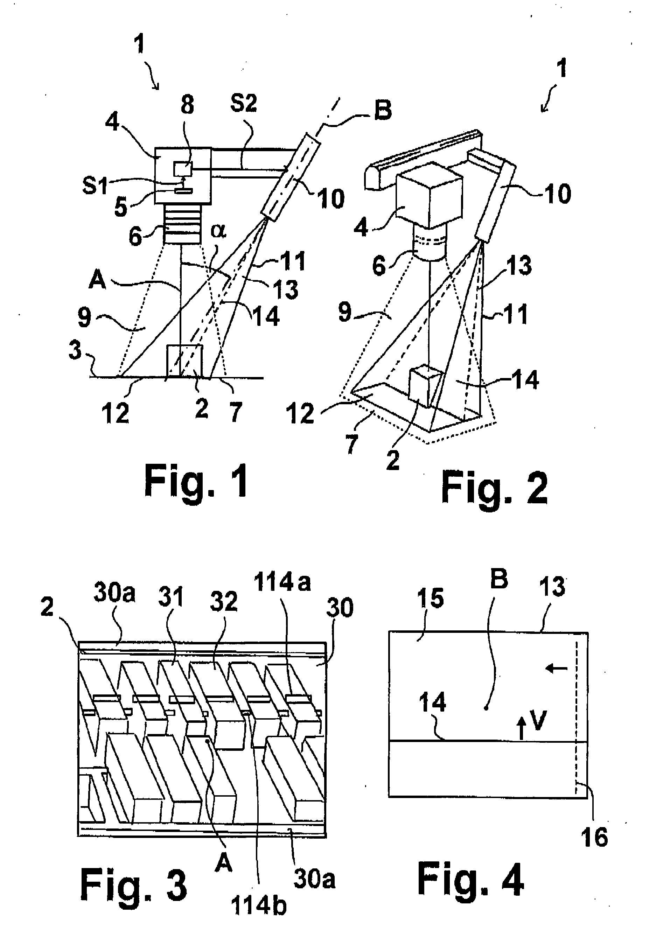

Eine Höhenvermessungs-Vorrichtung 1 dient zur Höhenvermessung einer Kraftfahrzeug-Zentralelektrik 2 auf einem Prüftisch 3, wobei der Prüftisch 3 auch z. B. als Förderband ausgebildet sein kann, um fortlaufend Kraftfahrzeug-Zentralelektriken 2 zu der Höhenvermessungs-Vorrichtung 1 zu befördern. In Figur 1, 2 Ist die Kfz-Zentralelektrik 2 der Einfachheit halber als im Wesentlichen kubischer Block dargestellt.

Die Prüfvorrichtung 1 weist eine Kamera 4 mit einem Imager-Chip 5 und einem Objektiv 6 auf. Die Kamera 4 ist vertikal über einem Messbereich 7 des Proftisches 3 ausgerichtet, d. h. ihre optische Achse A steht vertikal auf dem Prüftisch 3. Der Imager-Chip 5 weist in an sich bekannter Weise eine Matrlx-Anordnung von Imager-Pixeln auf und liefert somit Bildsignale S1 eines zweidimensionalen Bildes an eine Steuereinrichtung 8, die z. B. im gleichen Gehäuse wie die Kamera 4 aufgenommen ist.

Weiterhin weist die Höhenvermessungs-Vorrichtung 1 einen Beamer 10 zur Ausgabe eines zweidimensionalen Video-Projektionsbildes 13 auf. Der Beamer 10 ist somit dafür vorgesehen, innerhalb des Raumwinkels 11 ein Video-Bild als Video-Projektionsbild 13 auszugeben, wobei in Figur 1, 2 die Projektionsfläche 12 dargestellt ist, auf der der von dem Beamer 10 ausgeleuchtete Raumwinkel 11 den horizontalen Messbereich 7 bzw. die horizontale Ebene des Prüftisches 3 schneidet. Grundsätzlich kann die Projektionsfläche 12 größer oder kleiner als der Messbereich 7 sein; relevant ist, dass der von der Projektionsfläche 12 erfasste Messbereich 7 das zu vermessene Objekt, d. h. Kfz-Zentralelektrik 2, vollständig erfasst.

Der Beamer 10 kann den von ihm erfassten Raumwinkel 11 hierbei insbesondere rasterweise beleuchten bzw. abscannen d. h. in ein Raster unterteilen, dass er sukzessive bearbeitet oder beleuchtet. Der Beamer 10 nimmt elektrische Projektions-Bildsignale S2 von der Steuereinrichtung 8 auf und projiziert diese Projektions-Bildsignale S2 als Video-Projektionsbilder 13 in den Raumwinkel 11. Die optische Achse B des Beamers 10 ist um einen Winkel α gegenüber der optischen Achse A der Kamera 4 versetzt, wobei die optischen Achsen A und B sich vorteilhafterweise - aber nicht zwingend - im Messbereich 7 schneiden können. Relevant ist grundsätzlich nur, dass die Projektionsfläche 12 der ausgegebenen Projektions-Bildsignale S2 auf dem Prüftisch 3 sich in ausreichendem Maße mit dem von der Kamera 4 erfassten Messbereich 7 überschneiden.

Ein Beispiel eines Video-Projektionsbildes 13 ist in Figur 4 dargestellt. Gemäß dieser Ausführungsform weist das Projektions-Bildsignal S2 eine z. B. horizontale Linie 14 auf, die sich zeitlich bewegt. In jedem Frame des Bildsignals S2 ist somit eine Darstellung gemäß Figur 4 enthalten, bei der eine Linie 14 in einer festen horizontalen Position ist, wobei die Linie 14 sich in dem Videofiilm bewegt und somit ein sich bewegender Lichtvorhang bzw. Lichtschnitt simuliert wird, der den Raumwinkel 11 abfährt. Die weiteren Bereiche 15 des Video-Projektionsbildes 13 können vollständig dunkel sein, so dass lediglich die helle Linie 14 in dem Raumwinkelbereich 11 eine relevante Intensität aufweist. Allerdings können die weiteren Bereiche 15 in weiteren Messungen ebenfalls ausgeleuchtet werden, z. B. auch inhomogen bzw. mit unterschiedlicher Intensität, um die unterschiedlichen Teile des Messbereichs 7 geeignet für andere Messungen auszuleuchten, wobei an sich dunkle Bereiche stärker ausgeleuchtet werden können.

Die Linie 14 wandert entsprechend mit einer Geschwindigkeit v, die nicht von einem kontinuierlich geänderten Spiegel abhängt, sondern sich lediglich als Folge unterschiedlicher Linien in der Folge der Bilder 13 des Projektions-Bildsignals S2 darstellt. Grundsätzlich kann die Linie 14 auch springen oder andere Formen annehmen.

Weiterhin können auch zwei oder mehr derartige Linien 14 in dem Raumwinkel 11 wandern, z. B. von außen nach innen, um sich in der Mitte zu treffen. In Figur 4 ist gestrichelt eine weitere Linie 16 als hier vertikale Linie dargestellt, die somit in der Darstellung der Figur 4 horizontal bzw. nach links wandert und somit die Steckteile 31, 32 entlang einer anderen Richtung abfährt. Erfindungsgemäß können somit Projektions-Bildsignale S2 mit vielfältigen, sich zeitlich ändernden Bildmustem ausgegeben werden, wobei insbesondere die Simulation einer oder mehrerer sich überschneidender Lichtvorhänge bzw. Lichtschnitte als vorteilhaft angesehen wird, da hierdurch eine gleichmäßige Abtastung und Auswertung ermöglicht ist.

Die Steuereinrichtung 8 dient zur Aufnahme der Bildsignale S1 der Kamera 4 und zur Ausgabe der Projektions-Bildsignale S2. Die Projektions-Bildsignale S2 können gemäß einem vorgemerkten Programm immer gleichmäßig ausgegeben werden. Alternativ können die Projektions- Bildsignale S2 jedoch auch in Abhängigkeit der aufgenommenen ersten Bildsignale S1 ausgegeben werden; insbesondere kann die Steuereinrichtung 8 bereits eine Auswertung der aufgenommenen ersten Bildsignale S1 durchführen, und bei Erkennen von relevanten Kriterien die Abfolge der ausgegebenen Projektions-Bildsignale S2 ändern, z. B. um erkannte Problemstellen noch einmal bzw. mit einer anderen Lichtführung, z. B. einer langsameren Führung der Linie 14, einer Führung von der anderen Richtung her, oder auch der Ausgabe einer anderen Lichtlinie 16, z. B. auch einer schräg vedaufenden Lichtlinie, erneut rasterweise zu beleuchten bzw. abzuscannen.

Weiterhin können mehrere Linien 14 und/oder 16 auch in unterschiedlichen Spektralfarben bzw. unterschiedlichen Wellenlängen ausgegeben werden, so dass der Imager-Chip 5 dann eine wellenlängenselektive Aufnahme vornimmt, d. h. farbige Bildsignale S1 liefert; hierzu sind Imager-Chips 5 mit entsprechenden Farbmasken bekannt.

Mit den Linien 14 und der Auswertung der Bildsignale S1 wird erfin-dungsgemäß eine Triangulation, d. h. Höhenvermessung durch Projektion und Bildauswertung der Position der projizierten Linie 14 durchgeführt. Ein in dem Messbereich 7 als Teil der Kfz-Zentralelektrik 2 vorhandenes Objekt 31, 32 wird von der Linie 14 entsprechend seiner Höhe abgetastet. In dem aufgenommenen Bildsignal S1 erscheint das Bild der Linie 14 an einer Position, die von der Höhe des Objektes 31, 32 abhängt. Derartige Auswerteverfahren durch Triangulation sind als solche bekannt.

Gemäß Figur 3 weist die Kfz-Zentralelektrik 2 eine Gehäusewand 30 und innerhalb der Gehäusewand 30 mehrere Sicherungen 31 und Relais 32 auf, die als Steckteile in Steckaufnahmen der Kfz-Zentralelektrik 2 bzw. ihres Gehäuses gesetzt sind. Die Sicherungen 31 und Relais 32 können jeweils gleiche Höhe aufweisen, so dass sich bei ordnungsgemäßem Einstecken ein gleichmäßiges Höhenprofil der Sicherungen 31 und Relais 32 ergeben sollte, so dass in dem von der Kamera 4 aufgenommen, in Figur 3 gezeigten Bild das Linienbild der Linie 14 zusammengesetzt ist aus ersten Linienbildbereichen 114a, die den höheren Sicherungen 31 und Relais 32 entsprechen, und zweiten Linienbildbereichen 114b in den Bereichen zwischen den Sicherungen 31 und Relais 32, d. h. insbesondere auf dem Boden der Kfz- Zentralelektrik 2. Eine nicht ordnungsgemäß eingesetztes Steckteil 31 oder 32 zeigt sich somit als Sprung des Linienbildbereichs 114a, in der Darstellung der Figur 3 als Sprung nach oben, wenn das entsprechende Bauelement zu hoch sitzt.

Mehrere Linien 14 oder 16 können insbesondere durch ihre Wellenlänge unterschieden werden. Weiterhin können die Linien mit unterschiedlichen Wellenlängen auch zur Überprüfung des Farbwertes der Sicherung 31 und Relais 32 dienen, um z. B. den für die Typisierung relevanten Farbton und/oder den Transparenzwert zu ermitteln, Somit können auch entsprechende Bauelemente mit falschem Farbwert, oder falscher Transparenz zusätzlich erkannt werden, indem eine Auswertung des Farbwertes der aufgenommenen Bildsignale S1 durchgeführt wird.

Somit können erfindungsgemäß auch ergänzende Prüfschritte zur Typisierung oder Klassifizierung der Sicherungen 31 und Relais 32 durch ihren Farbwert und Transparenzwert sowie durch Erkennen von Schrift mittels Texterkennung (OCR) unterstützt werden.

Der Einsatz von Linien 14 und hierzu orthogonal versetzten weiteren Linien 16 ist insbesondere bei Kfz-Zentralelektriken 2 vorteilhaft, bei denen Sicherungen 31 und Relais 32 nicht nur wie gezeigt parallel in gleicher Einsteckrichtung, sondern auch z. B. teilweise um 90 Grad versetzt sind, da somit sämtliche Steckteile 31, 32 entlang ihrer Längserstreckung beleuchtet werden können. Somit kann insbesondere bei Erkennen eines anders herum eingesetzten Steckteils 31, 32 nachfolgend die Steuereinrichtung 8 Projektions-Bildsignale S2 derartig ausgeben, dass zusätzlich oder gleichzeitig die weitere Linie 16 ausgegeben wird, die entsprechend In einer anderen Richtung über den Messbereich 7 verfahren wird.

Grundsätzlich können auch deutlich komplexere Projektionen als Linien 14 und 16 ausgegeben werden, wobei hier eine hohe Variabilität gegeben ist und entsprechend die Projektions-Bildsignale S2 erstellt werden können, insbesondere in Abhängigkeit der aufgenommenen Bildsignale S1.

Die Steuereinrichtung 8 kann auch das Bild der erfassten Gehäusewand 30 auswerten. Insbesondere kann eine Kante 30a der Gehäusewand 30 bzw. der Sicherheitsdose in dem Bildsignal S1 erkannt und in der Höhenposition ausgewertet werden. Diese Kante 30a kann dann als Bezugspunkt für die Höhe der Steckteile 31, 32 herangezogen werden, um nicht nur relative Höhen der Steckteile 31, 32 zueinander, sondern auch absolute Höhen bzw. Höhen relativ zur Gehäusewand 30 detektieren zu können.

### Bezugszeichenliste

- 1: Höhenvermessungs-Vorrichtung
- 2: Kraftfahrzeug-Zentralelektrik
- 3: Prüftisch
- 4: Kamera
- 5: Imager-Chip
- 6: Objektiv
- 7: Messbereich
- 8: Steuereinrichtung
- 10: Beamer
- 11: Raumwinkel
- 12: Projektionsfläche auf Prüftisch 3
- 13: zweidimensionales Video-Projektionsbild
- 14: Linie
- 15: weitere Bereiche des Video-Projektionsbildes
- 16: Linie
- 30: Gehäusewand
- 30a: Kante der Gehäusewand 30
- 31: Sicherung
- 32: Relais
- 114a: erste Linienbildbereiche
- 114b: zweite Linienbildbereiche

- A: optische Achse der Kamera 4
- B: optische Achse des Beamers 10
- S1: Bildsignale
- S2: Projektions-Bildsignale
- v: Geschwindigkeit
- α: Projektionswinkel

## Patentansprüche

1. Höhenvermessungs-Vorrichtung (1) zur Höhenvemessung einer Kraftfahrzeug-Zentralelektrik (2) mit aufgenommenen Steckteilen (31, 32), wobei die Höhenvermessungs-Vorrichtung (1) mindestens aufweist:
eine Video-Projektionseinrichtung (10) zur Aufnahme von Video-Projektions-Bildsignalen (S2) von einer Steuereinrichtung (8) und
Ausgabe eines zweidimensionalen Video-Projektionsbildes (13) auf einen Messbereich (7),
eine Kamera (4) zur Aufnahme eines zweidimensionalen Bildes des Messbereichs (7) und Ausgabe von Bildsignalen (S1) an die Steuereinrichtung (8) zur Ermittlung einer Höhenkonturierung der Steckteile (31, 32) durch Triangulation,
wobei die Projektionseinrichtung (10) unter einem Projektionswinkel (a) gegenüber der optischen Achse (A) der Kamera (4) versetzt ist, wobei in dem zweidimensionalen Video-Projektionsbild (13) eine zeitlich sich verändernde Struktur (14, 16) für die Triangulation enthalten ist.

2. Höhenvermessungs-Vorrichtung (1) nach Anspruch 1, **dadurch gekennzeichnet, dass** die Steuereinrichtung (8) aus den Bildsignalen (S1) eine Höhenkonturierung der Steckteile (31, 32) der im Messbereich (7) erfassten Kraftfahrzeug-Zentralelektrik (2) durch Triangulation ermittelt zur Überprüfung eines ordnungsgemäßen Sitzes der Steckteile (31, 32).

3. Höhenvermessungs-Vorrichtung (1) nach Anspruch 1 oder 2, **dadurch gekennzeichnet, dass** die Video-Projektionseinrichtung (10) gebildet ist aus einer Halbleiter-Einrichtung ohne makroskopisch bewegliche Elemente, z. B. einen DLP-Beamer oder LED- Beamer.

4. Höhenvermessungs-Vorrichtung (1) nach einem der vorherigen Ansprüche, **dadurch gekennzeichnet dass** das Video-Projektionsbild (13) einen z. B. vorprogrammierten oder aktuell erzeugten Video-Film enthält, in dem mindestens eine sich zeitlich verändernde Struktur (14, 16) dargestellt wird.

5. Höhenvermessungs-Vorrichtung (1) nach einem der vorherigen Ansprüche, **dadurch gekennzeichnet dass** in dem Video-Projektionsbild (13) als Struktur mindestens eine Linie (14,16) enthalten ist, die sich in dem Video-Projektionsbild (13) bewegt, und die Steuereinrichtung (8) in den Bildsignalen (S1) ein Linienbild (114a, 114b) der Linie für die Triangulation ermittelt.

6. Höhenvermessungs-Vorrichtung (1) nach Anspruch 5, **dadurch gekennzeichnet, dass** in dem Video-Projektionsbild (13) zumindest zeitweise mindestens zwei wandernde Linien (14, 16) enthalten sind, die einander folgen und/oder unterschiedlichen Bewegungsverlauf haben und/oder eine andere Richtung aufweisen.

7. Höhenvermessungs-Vorrichtung (1) nach Anspruch 6, **dadurch gekennzeichnet, dass** in dem Video-Projektionsbild (13) gleichzeitig und/oder zeitversetzt mindestens zwei nicht parallele Linien (14, 16), z. B. orthogonal versetzte Linien (14, 16), zeitlich veränderlich abgebildet sind.

8. Höhenvermessungs-Vorrichtung (1) nach Anspruch 6 oder 7, **dadurch gekennzeichnet, dass** mindestens zwei vorzugsweise parallele Linien (14) in unterschiedlichen Wellenlängenbereichen ausgebildet sind, das Bildsignal der Kamera (4) ein Farbbildsignal (S1) ist und die Steuereinrichtung (8) die aufgenommenen Linienbilder der Linien (14) miteinander vergleicht, insbesondere bezüglich Intensität oder Position.

9. Höhenvermessungs-Vorrichtung (1) nach einem der vorherigen Ansprüche, **dadurch gekennzeichnet, dass** die Steuereinrichtung (8) die Video-Projektions-Bildsignale (S2) in Abhängigkeit einer Auswertung der aufgenommenen Bildsignale (S1) ausgibt.

10. Höhenvermessungs-Vorrichtung (1) nach Anspruch 9, **dadurch gekennzeichnet, dass** die Steuereinrichtung (8) bei der Auswertung der aufgenommenen Bildsignale (S1) bei Erkennen einer Unregelmäßigkeit und/oder eines nicht ordnungsgemäßen Sitzes eines Steckteils (31, 32) die Ausgabe der Video-Projektions-Bildsignale (S2) ändert.

11. Höhenvermessungs-Vorrichtung (1) nach einem der vorherigen Ansprüche, **dadurch gekennzeichnet, dass** die Steuereinrichtung (8) eine Höhenkonturierung einer Gehäusewand-Kante (30a) der Kraftfahrzeug-Zentralelektrik (2) ermittelt und die ermittelten Höhen der Steckteile (31, 32) der Kraftfahrzeug-Zentralelektrik (2) in Relation zur ermittelten Höhenkonturierung der Gehäusewand (30a) setzt zur Ermittlung einer absoluten Höhe oder Einstecktiefe der Steckteile (31, 32).

12. Höhenvermessungs-Vorrichtung (1) nach einem der vorherigen Ansprüche, **dadurch gekennzeichnet, dass** die Video- Projektionseinrichtung (10) den Messbereich (7) auch außerhalb eines Höhenvermessungsvorgangs, insbesondere bei einer Farbermittlung und/oder Transparenzermittlung und/oder Texterkennung der Steckteile (31, 32) ausleuchtet, insbesondere inhomogen ausleuchtet.

13. Höhenvermessungs-Vorrichtung (1) nach einem der vorherigen Ansprüche, **dadurch gekennzeichnet, dass** die Video- Projektionseinrichtung (10) in einem ersten Teilschritt Kalibrierpunkte projiziert und die Steuereinrichtung (8) aus den aufgenommenen Bildsignalen (S1) der erfassten Kalibrierpunkte eine Kalibrierung des Systems aus der Kamera (4) und der die Video- Projektionseinrichtung (10) für die Triangulation durchführt, und nachfolgend die Steuereinrichtung (8) in einem zweiten Teilschritt die Projektions-Bildsignale (S1) für eine Höhenvermessung der Steckteile (31, 32) ausgibt.

14. Verfahren zur Höhenvermessung einer Kraftfahrzeug-Zentratelektrik (2) mit aufgenommenen Steckteilen (31, 32), bei dem Video-Projektions-Bildsignalen (S2) an eine Video- Projektionseinrichtung (10) gegeben werden
die Video- Projektionseinrichtung (10) aus den Video-Projektions-Bildsignalen (S2) ein zweidimensionales Video-Projektionsbild (13) bildet und auf einen Messbereich (7) projiziert,
eine Kamera (4) ein zweidimensionales Bild des Messbereichs (7) aufnimmt und Bildsignalen (S1) ausgibt,
aus den Video-Projektions-Bildsignalen (S2) und aufgenommenen Bildsignalen (S1) eine Höhenkonturierung der Steckteile (31, 32) durch Triangulation ermittelt wird,
wobei die Projektionseinrichtung (10) unter einem Projektionswinkel (a) gegenüber der optischen Achse (A) der Kamera (4) versetzt ist, wobei in dem zweidimensionalen Video-Projektionsbild (13) eine zeitlich sich verändernde Struktur (14, 16) für die Triangulation enthalten ist.

15. Verfahren nach Anspruch 14, **dadurch gekennzeichnet, dass** das zweidimensionale Video-Projektionsbild (13) einen Video-Film enthält, in dem oder als Teil von dem die mindestens eine sich zeitlich verändernde Licht-Struktur (14, 16), z. B. mindestens eine sich bewegende Linie, dargestellt wird.
